# EUROPEAN PATENT SPECIFICATION

(11) **EP 4 346 167 B1**
(45) Date of publication and mention of the grant of the patent: **30.07.2025**
(21) Application number: 23198983.1
(22) Date of filing: 22.09.2023
(51) Int. Cl.: G06F 21/31, G06Q 20/18, G06Q 20/20, G06Q 20/32, G06Q 20/40, G07F 19/00, G06Q 20/10, H04L 9/40

(54) **MONEY HANDLING SYSTEM AND MONEY HANDLING METHOD**
GELDHANDHABUNGSSYSTEM UND GELDHANDHABUNGSVERFAHREN
SYSTÈME ET PROCÉDÉ DE MANIPULATION D'ARGENT

(30) Priority: 30.09.2022 JP 2022157455
(43) Date of publication of application: 03.04.2024
(73) Proprietor: GLORY LTD., Himeji-shi Hyogo 670-8567 (JP)
(72) Inventor: MATSUO, Ippei, Hyogo, 670-8567 (JP); SUSENIO, Herman, Hyogo, 670-8567 (JP)
(74) Representative: SSM Sandmair

(56) References cited:
- US-A1- 2019 377 864
- US-A1- 2021 075 796
- US-B1- 11 334 893

## Description

### TECHNICAL FIELD

The present disclosure relates to a money handling system and a money handling method.

### BACKGROUND ART

Conventionally, authentication of users has been performed in various money handling systems. For example, a user of a money handling apparatus is requested to input user information such as a user ID and a password, the inputted user information is checked with user information registered in advance, and when the inputted user information matches the registered user information, the user is authenticated to be an authorized user. Authentication using biometric information or two-factor authentication may be performed in order to enhance security related to user authentication.

For example, Japanese Laid-Open Patent Publication No. 2016-136299 discloses a conventional system. The conventional system may perform two-factor authentication, i.e., password authentication and voiceprint authentication, when a user dispenses cash from an ATM (Automatic Teller Machine) by using a cash card. In a first authentication process, information obtained from the cash card is used as a user ID and the user inputs a password of the user ID. The user, who has been authenticated in the first authentication process, is subjected to a second authentication process that uses voice. A secret question for the second authentication, an answer to the question, and the voice of the user uttering the answer, are prepared in advance in an authentication server. In the second authentication process, the secret question is given to the user, the user utters the answer, and an obtained voice is compared with the voice in the authentication server, thereby identifying the user.

US 2019/377864 A1 discloses an authentication device. The devise may receive a request from a first user device to access a protected device. The device may verify a user identity of a user of the first device based on user credentials and determine that an authentication code is needed to authenticate the request to access the protected device. The device may dynamically generate multiple codes and transmit the multiple codes to a second user device associated with the user identity of the user of the first device. A first code, of the multiple codes, may correspond to a correct authentication code needed to authenticate the request to access the protected device. The device may transmit a message including an instruction for identifying the correct authentication code from among the multiple codes, receive a second code from the first device, compare the second code and the first code, and selectively authenticate the request to access the protected device.

US 2021/075796 A1 and US 11 334 893 B1 are further examples of prior art related with the application.

### SUMMARY

In the conventional art, however, after the user inputted the user ID and the password, and authenticated based on the inputted information, the user further needs to check the question and utter the answer, which is troublesome for the user. Additionally, since the user is not authenticated if the answer to the question is wrong, the user needs to memorize the question and the answer in addition to the password. Therefore, the conventional authentication method may not be a user-friendly method.

The present disclosure is made in view of the above problem of the conventional art. The present disclosure addresses the problem, as discussed herein, with a money handling system and a money handling method that can ensure security related to money handling by using a user-friendly authentication method.

The invention is defined by the independent claims. Further embodiments are specified in the dependent claims.

In an exemplary implementation of the present disclosure, a money handling system comprises: a money handling apparatus to perform money handling; an input terminal configured to receive an input of authentication information for authenticating a user of the money handling apparatus, and transmit the authentication information to an authentication server which performs a first authentication process for the user based on the authentication information; and a control device including processing circuitry configured to receive user information of the user from the authentication server based on a result of the first authentication process, and perform a second authentication process for the user based on the user information.

### BRIEF DESCRIPTION OF THE DRAWINGS

FIG. 1 illustrates a money handling system according to an embodiment of the present disclosure;
FIG. 2 shows an example of profile data;
FIG. 3 shows an example of mapping data;
FIGS. 4A and 4B each show an example of setting contents when a money handling server performs money handling; and
FIGS. 5A to 5C each illustrate an example of processing performed in a store.
FIG. 6 is a block diagram of processing circuitry that performs computer-based operations in accordance with the present disclosure.

### DESCRIPTION OF EMBODIMENTS

The inventors of the present disclosure have recognized that with conventional devices, after a user has input a user ID and password, and the user has been authenticated based on the inputted information, the user further needs to check a question and input an answer, which is troublesome for the user. Additionally, since the user is not authenticated if the answer to the question is wrong, the user needs to memorize the question and the answer in addition to the password. Therefore, conventional authentication systems and methods are not user-friendly.

The inventors have developed the present disclosure to address issues with the conventional systems and methods. The present disclosure addresses problems, as discussed herein, with a money handling system and a money handling method that can ensure security related to money handling by using a user-friendly authentication method.

A money handling system according to one aspect of the present disclosure includes: a money handling apparatus configured to perform money handling; an input terminal configured to receive an input of authentication information for authenticating a user of the money handling apparatus; and a control device configured to receive user information of the user from an authentication server. The authentication server is a device that receives the authentication information of the user from the input terminal, and performs a first authentication process for the user, based on the authentication information. The control device performs a second authentication process for the user, based on the user information received from the authentication device.

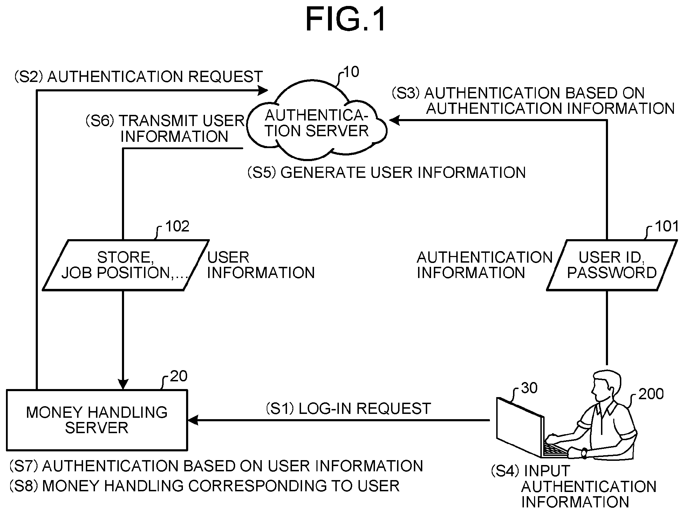

Hereinafter, an embodiment of a money handling system and a money handling method according to the present disclosure will be described with reference to the accompanying drawings. FIG. 1 illustrates a money handling system according to the present embodiment. The money handling system includes an authentication server 10, a money handling server 20, and an operation terminal 30. The authentication server 10 is communicably connected to the money handling server 20 and the operation terminal 30. The money handling server 20 is communicably connected to the operation terminal 30.

An installation location and a user of the money handling system are not particularly limited. The description will be continued for a case where the money handling system is used in a retail store that sells items to customers. Although the configuration shown in FIG. 1 is regarded as a money handling system in the description below, since a money handling system in each store may be constituted by using the money handling server 20, the system of each store including the money handling server 20 may be regarded as a first money handling system, and the configuration shown in FIG. 1 may be regarded as a second money handling system including the first money handling system.

The authentication server 10 may be a cloud server. The authentication server 10 stores various kinds of information therein, receives operations through a network such as the Internet, and performs various kinds of processes corresponding to the operations. The money handling server 20 may be a computer device that provides functions related to money handling performed in the store. The authentication server 10 and the money handling server 20 may be implemented in any way as long as the servers can perform processes described below. For example, both the authentication server 10 and the money handling server 20 may be cloud servers, or may be computer devices.

The operation terminal 30 is used by a user 200 who uses the money handling server 20. The operation terminal 30 serves as an input terminal to which the user 200 inputs various kinds of information. For example, a smartphone, a tablet computer, or the like wirelessly communicable with the money handling server 20 is used as the operation terminal 30. The operation terminal 30 may be a computer device communicably connected to the money handling server 20 wirelessly or via wires. The money handling server 20 may include an operation unit and a display unit, and these units may be used as the operation terminal 30. The operation terminal 30 may be a terminal that is used with or included in a money handling apparatus connected to the money handling server 20, which will be described later.

Although FIG. 1 shows one money handling server 20 and one operation terminal 30, the authentication server 10 may be shared by a plurality of money handling servers 20 and/or a plurality of operation terminals 30. For example, each of a plurality of stores has a money handling server 20 installed therein, and staff members of the store, such as a store manager, a sub manager, and a cashier, are users 200 who use the operation terminal 30.

When using the money handling server 20, the user 200 operates the operation terminal 30 to request the money handling server 20 to perform a log-in process (step S1). The money handling server 20 requests the authentication server 10 to perform an authentication process for the user 200 who requested the log-in process (step S2).

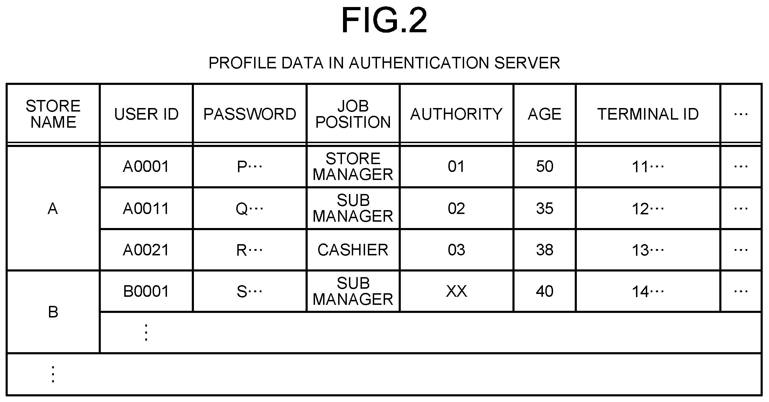

The authentication server 10 performs the authentication process for the user 200 who wants to log into the money handling server 20. In the authentication server 10, profile data, in which information on a plurality of users 200 has been registered, is prepared in advance. FIG. 2 shows an example of the profile data. Information on a plurality of staff members belonging to each of a plurality of stores, is registered in the profile data.

The profile data includes user IDs and passwords to be used for log-in of the respective users 200. The profile data further includes information on the respective users 200 provided from each store. For example, personnel information in each store is registered in the profile data. In the example shown in FIG. 2, job position, authority, age, terminal ID (identification information such as IMEI of each terminal), etc., obtained from the personnel data have been registered in the profile data. In the profile data shown in FIG. 2, the same kinds of information are registered for a store A and a store B, but different kinds of information may be registered for the store A and the store B. The profile data shown in FIG. 2 is an example. The profile data may include some or all of the information shown in FIG. 2, e.g., age, and may or may not include information not shown in FIG. 2, e.g., gender.

As shown in FIG. 1, the authentication server 10 performs the authentication process for the user 200, based on authentication information 101 (step S3). The authentication process is performed by using the user ID and the password of the user 200 registered in the profile data in advance.

Specifically, when the user 200 inputs the user ID and the password by operating the operation terminal 30 (step S4), the authentication information 101 including the user ID and the password is transmitted from the operation terminal 30 to the authentication server 10. The authentication server 10 authenticates the user 200, based on that the user ID and the password included in the authentication information 101 match the user ID and the password registered in the profile data in advance. If the combination of the user ID and the password inputted to the operation terminal 30 is not present in the profile data, the user 200 is not authenticated and therefore cannot use the money handling server 20.

The authentication server 10 can specify the store to which the authenticated user 200 belongs, the job position of the user 200, and the like by referring to the information registered in the profile data. The authentication server 10 generates user information 102 from one or more pieces of information registered in the profile data (step S5). The user information 102 is generated based on setting prepared in advance. The setting for generating the user information 102 may be different among stores.

For example, when the user 200 of the store A, for which setting is prepared to generate user information 102 by combining the store name and the job position, is authenticated and identified to be the user 200 having the user ID of "A0001" shown in FIG. 2, user information 102 indicating "A, store manager" is generated by combining the store name "A" and the job position "store manager". If the store A is set to generate user information 102 by combining the store name, the job position, and the authority, user information 102 indicating "A, store manager, 01" is generated. However, the form of "A, store manager" or the like is an example. The form of the user information 102 generated by the authentication server 10 is not particularly limited as long as the money handling server 20 can acquire the pieces of information included in the user information 102.

The authentication server 10 transmits the user information 102 generated for the authenticated user 200, to the money handling server 20 that has requested the authentication process of the user 200 (FIG. 1, step S6). The money handling server 20 performs the authentication process for the user 200, based on the user information 102 received from the authentication server 10 (step S7). That is, while the authentication server 10 performs a first authentication process of authenticating the user 200 based on the authentication information 101 inputted to the operation terminal 30 serving as an input terminal, the money handling server 20 serving as a control device in the store performs a second authentication process of authenticating the user 200 based on the user information 102 generated by the authentication server 10. In the authentication process by the money handling server 20, a determination process is performed to confirm that the pieces of information included in the user information 102 indicate a staff member having an authority to use the money handling server 20. In the determination process, the money handling server 20 determines whether or not the pieces of information included in the user information 102 match the pieces of information managed by the money handling server 20.

The money handling server 20 can determine whether or not the store name included in the user information 102 matches the store name of the store in which the money handling server 20 is installed. For example, when the money handling server 20 of the store A has received the user information 102 including the store name of the store B, the money handling server 20 determines that the user information 102 does not indicate a staff member who is permitted to use the money handling server 20, and does not permit the user 200 to use the money handling server 20. Even when the user 200 has been authenticated by the authentication server 10, the user 200 cannot use the money handling server 20 unless the user 200 is authenticated by the money handling server 20.

The money handling server 20 can determine whether or not the job position included in the user information 102 matches the job position in the store in which the money handling server 20 is installed. If the job position included in the user information 102 is different from a job position having an authority to use the money handling server 20, the money handling server 20 determines that the user information 102 does not indicate a staff member who is permitted to use the money handling server 20, and does not permit the user 200 to use the money handling server 20. Similarly, in a case where the user information 102 includes information other than the store name and the job position, the money handling server 20 can perform a similar determination process with respect to each piece of the information.

As described above, in the money handling system, as for the user 200 who requests to use the money handling server 20, after the first authentication process based on the user ID and the password of the user 200 has been performed by the authentication server 10, the second authentication process based on the user information 102 is further performed by the money handling server 20. The money handling server 20 does not receive the user ID and the password from the operation terminal 30, but receives the user information 102 from the authentication server 10 to perform the authentication process. The user information 102 is generated from one or more pieces of other information that are already stored in the profile data in association with the user ID and the password. Since both the authentication process by the authentication server 10 based on the authentication information 101 and the authentication process by the money handling server 20 based on the user information 102 are performed, security related to use of the money handling server 20 can be enhanced.

In the money handling server 20, mapping data indicating the correspondence between the pieces of information to be included in the user information 102, and information on processes to be performed by the money handling server 20, may be stored in advance. Using the mapping data, the money handling server 20 converts the pieces of information included in the user information 102 into information to be used by the money handling server 20, and performs the processes based on the converted information.

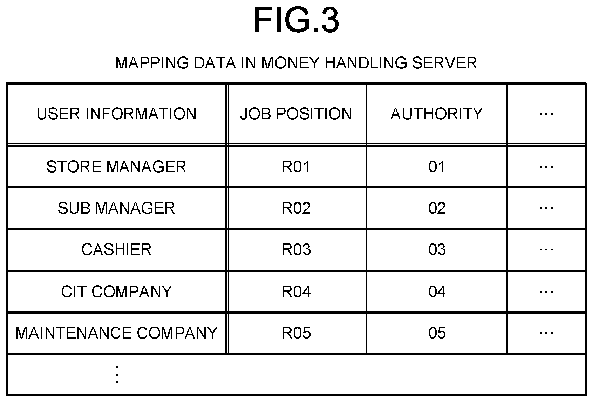

FIG. 3 shows an example of the mapping data. In the mapping data, the pieces of information included in the user information 102 are associated with pieces of information used by the money handling server 20. The mapping data shown in FIG. 3 indicates that the job positions, such as "store manager", "sub manager", etc., included in the user information 102 correspond to "R01", "R02", etc., indicating the job positions used by the money handling server 20.

The mapping data may associate information included in the user information 102 with information of a kind different from the information in the user information 102. For example, as shown in FIG. 3, in addition to the correspondence between "job position" in the user information 102 and "job position" used by the money handling server 20, the correspondence between "job position" in the user information 102 and other information, such as "authority", used by the money handling server 20, may be registered in the mapping data.

If the authentication server 10 is set to generate user information 102 including authority information registered in the profile data in the authentication server 10, the money handling server 20 can determine whether or not the authority information included in the user information 102 received from the authentication server 10 matches the authority, of the user 200, managed in the money handling server 20.

For example, in the authentication process for the user 200 who is a cashier, the authentication server 10 generates user information 102 indicating "cashier, 03" that is a combination of the job position "cashier" and the cashier's authority "03" registered in the profile data. Upon receiving the user information 102, the money handling server 20 determines whether or not the user information 102 matches the authority information registered in the mapping data.

If the money handling server 20 is subjected to a malicious attack and thereby the cashier's authority set as "03" in FIG. 3 is rewritten to "01" that is the store manager's authority, the information of the cashier in the money handling server 20 corresponding to the user information 102 consisting of the job position and the authority becomes "cashier, 01". In this case, the money handling server 20 can determine that the user information 102 indicating "cashier, 03" received from the authentication server 10 does not match the information indicating "cashier, 01" in the money handling server 20, and does not permit the user 200 to use the money handling server 20. This prevents the user 200 authenticated as a cashier by the authentication server 10 from using the money handling server 20 with the same authority as the store manager.

The money handling server 20 can perform a notification process on the result of the authentication process performed based on the user information 102. For example, if the store name included in the user information 102 does not match the name of the store in which the money handling server 20 is installed, the money handling server 20 displays predetermined information on the operation terminal 30 to notify the user 200 of the determination result.

Notification by the money handling server 20 may be performed by a predetermined terminal device such as another operation terminal 30 used by the store manager. For example, if the determination result indicates that the authority information of the user 200 included in the user information 102 does not match the authority of the user 200 managed in the money handling server 20, this determination result is notified to the store manager through the predetermined operation terminal 30, so that the store manager can investigate issues on an attack to the money handling server 20, for example.

The money handling server 20, which has authenticated the user 200 based on the user information 102, can perform money handling corresponding to the authenticated user 200 (FIG. 1, step S8). For example, the money handling server 20, which has recognized that the user 200 is the store manager based on the user information 102, displays a handling menu for the store manager on the operation terminal 30, and performs a process related to money handling selected by the user 200 thorough the operation terminal 30. Also, when the user 200 is a sub manager or a cashier, a handling menu according to the job position is presented to the user 200, and a process based on the selection of the user 200 is performed. That is, the content of the process to be performed by the money handling server 20 can be limited based on the user information 102. As for a handling menu changing method, only the kinds of money handling that the user 200 can perform may be displayed on the handling menu, or all the kinds of money handling may be displayed on the handling menu such that the user 200 cannot select some of them.

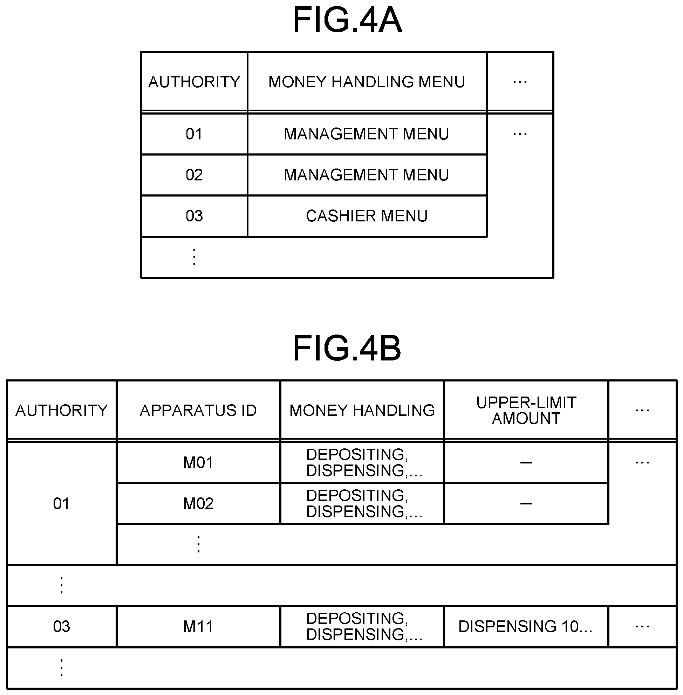

FIGS. 4A and 4B each show an example of setting contents when the money handling server 20 performs money handling. For example, as shown in FIG. 4A, setting indicating the correspondence between the authority of the user 200 and the money handling menu is prepared in the money handling server 20 in advance. For example, the money handling server 20 specifies the authority of the authenticated user 200, based on the user information 102 received from the authentication server 10 and on the mapping data shown in FIG. 3. After specifying the authority of the user 200, the money handling server 20 displays the handling menu corresponding to the authority of the user 200 on the operation terminal 30, based on the setting shown in FIG. 4A.

For another example, as shown in FIG. 4B, setting indicating the correspondence between the authority of the user 200 and kinds of the money handling is prepared in the money handling server 20 in advance. The money handling server 20, which has specified the authority of the user 200 based on the user information 102 and the mapping data, recognizes the money handling corresponding the specified authority in the store, based on the setting shown in FIG. 4B. The money handling server 20 performs various processes for the money handling that can be performed by the user 200.

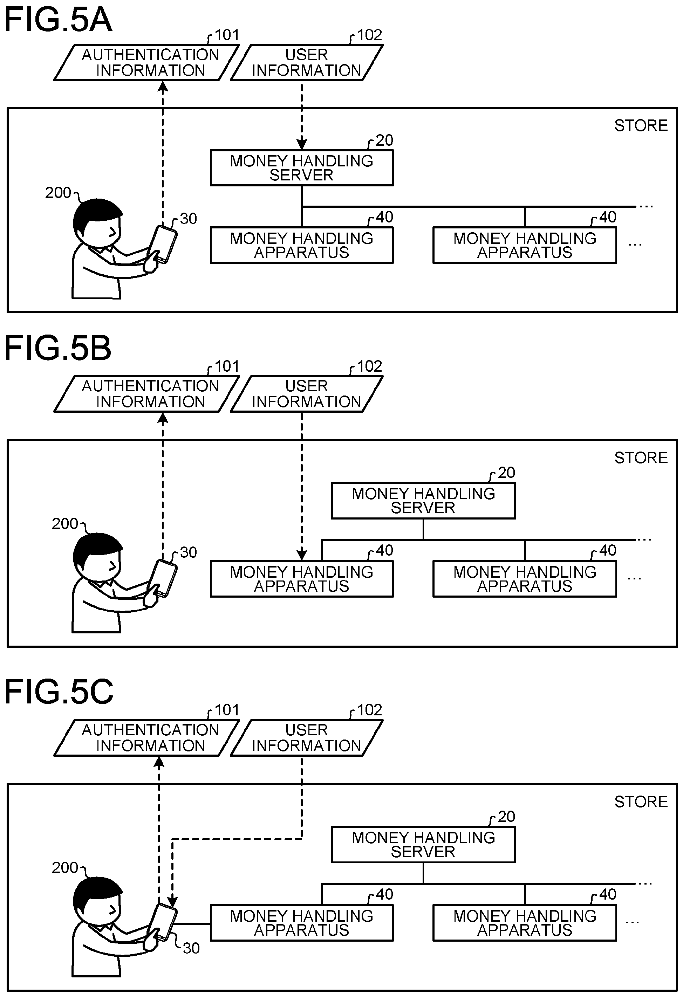

A specific example of processes that the money handling server 20 performs in the store will be described. FIGS. 5A to 5C illustrate examples of processes performed in the store. As shown in FIGS. 5A to 5C, the money handling server 20 is communicably connected to one or more money handling apparatuses 40 installed in the store. The money handling server 20 can manage each money handling apparatus 40. For example, the money handling server 20 can manage the denomination, quantity, amount, etc., of money stored in each money handling apparatus 40, and can limit the kind and content of money handling performed by each money handling apparatus 40. For example, the money handling apparatuses 40 include an apparatus installed at a checkout counter of the store and used for performing checkout for transactions with customers, and an apparatus installed in a back office of the store and used for managing money of the store. Since the money handling server 20 and the one or more money handling apparatuses 40 shown in FIGS. 5A to 5C constitute a money handling system for each store, the money handling server 20 shown in FIG. 1 can be regarded as an apparatus of a money handling system of each store.

As shown in FIGS. 5A to 5C, the user 200, who wants to use the money handling apparatus 40, inputs authentication information 101 by operating the operation terminal 30. The operation terminal 30 may be a communication terminal such as a smartphone independent from the money handling apparatus 40, or a terminal connected to the money handling apparatus 40. An operation unit and a display unit included in the money handling apparatus 40 may be used as the operation terminal 30. In the case where the operation terminal 30 connected to the money handling apparatus 40 is used or where the operation unit and the display unit of the money handling apparatus 40 are used as the operation terminal 30, address information of the authentication server 10 may be acquired in advance from the money handling server 20 into the money handling apparatus 40, and the authentication information 101 and the user information 102 may be transmitted/received between the operation terminal 30 and the authentication server 10 by using the address information.

Based on the authentication information 101 inputted to the operation terminal 30 by the user 200, the authentication server 10 performs the authentication process for the user 200 and generates the user information 102, as described above. As shown in FIG. 5A, the money handling server 20 may receive the user information 102 from the authentication server 10 and control the money handling apparatus 40. As shown in FIG. 5B, the money handling apparatus 40 may receive the user information 102 directly from the authentication server 10 and perform money handling based on the user information 102. As shown in FIG. 5C, the operation terminal 30 communicably connected to the money handling apparatus 40 wirelessly or via wires may receive the user information 102 from the authentication server 10, and the money handling apparatus 40 may perform money handling based on the user information 102 received in the operation terminal 30. Hereinafter, the example shown in FIG. 5A will be firstly described, and thereafter the examples shown in FIG. 5B and FIG. 5C will be described in order.

In the example shown in FIG. 5A, the money handling server 20, which has received the user information 102 from the authentication server 10, performs the authentication process for the user 200 based on the user information 102 and specifies the authority of the user 200, as described above.

In the money handling server 20, as shown in FIG. 4B, it is possible to set: the authorities; the apparatus IDs of one or more money handling apparatuses 40 that the user 200 having each authority can use; the kinds of money handling that each money handling apparatus 40 can perform; and limitation regarding the content of each money handling. In the example shown in FIG. 4B, as the limitation regarding the contents of the money handling, an upper-limit amount of money is set in order to limit the amount of money that can be handled at the time of money handling.

For example, the money handling server 20 recognizes that the user 200 has the authority to use the money handling apparatus 40 whose apparatus ID is "M01", based on the setting shown in FIG. 4B and on the authority of the user 200 specified based on the user information 102 and the mapping data. Then, the money handling server 20 controls the money handling apparatus 40 to set the money handling apparatus 40 in the money handling executable state such that the money handling apparatus 40 can start money handling. If there are a plurality of money handling apparatuses 40 for which the user 200 have use authorities, the money handling server 20 allows the user 200 to select a money handling apparatus 40 through the operation terminal 30. For example, a handling menu indicating the kinds of money handling that the user 200 can perform is displayed on the display unit of the money handling apparatus 40, so that the user 200 can select and start money handling with the money handling apparatus 40.

Based on the setting shown in FIG. 4B, the money handling server 20 can limit the kinds of money handling that the user 200 can perform by using the money handling apparatus 40, and can limit the content of each money handling.

For example, the user 200 is a cashier, and the money handling apparatus 40 is a change machine connected to a cash register operated by the cashier. The cashier operates the cash register to dispense change from the money handling apparatus 40. In this case, the money handling server 20 can limit the amount of money that the cashier can dispense per dispensing process or per day, based on the setting shown in FIG. 4B. For another example, if the user 200 is a staff member of a cash-in-transit (CIT) company that replenishes the money handling apparatus 40 with money, the money handling server 20 can limit the money handling apparatus 40 that can be replenished with money by the user 200 of the CIT. The money handling server 20 may limit the kinds of money handling to depositing process or replenishment process that can be performed in the money handling apparatus 40 by the CIT.

As shown in FIG. 5B, when the money handling apparatus 40 receives the user information 102 directly from the authentication server 10, the money handling apparatus 40 acquires the mapping data shown in FIG. 3 and the setting data shown in FIGS. 4A and 4B from the money handling server 20, and operates similarly to the money handling server 20 as described above. That is, while the authentication server 10 performs the first authentication process based on the authentication information 101, the money handling apparatus 40 serves as a control device for performing the second authentication process based on the user information 102.

Specifically, the money handling apparatus 40, which has received the user information 102 from the authentication server 10, performs the authentication process for the user 200 and specifies the authority of the authenticated user 200, based on the user information 102 and the mapping data. The money handling apparatus 40, which has confirmed that the user 200 has the authority to use the money handling apparatus 40 based on the specified authority of the user 200 and the setting shown in FIG. 4B, becomes able to perform money handling. For example, on the display unit of the money handling apparatus 40, a handling menu showing the kinds of money handling that the user 200 can perform is displayed, so that the user 200 can select and start money handling by using the money handling apparatus 40.

In the example shown in FIG. 5B, as in the example shown in FIG. 5A, the money handling apparatus 40 can limit the kinds of money handling that the user 200 can perform, and can limit the content of each money handling, based on the setting shown in FIG. 4B. When the money handling apparatus 40 performs money handling based on the user information 102 without intervention of the money handling server 20 as shown in FIG. 5B, information on the handling performed by the money handling apparatus 40 is transmitted to the money handling server 20, and the money handling server 20 manages handling history information.

As shown in FIG. 5C, when the operation terminal 30 communicably connected to the money handling apparatus 40 receives the user information 102 from the authentication server 10, the operation terminal 30 acquires the mapping data shown in FIG. 3 and the setting data shown in FIGS. 4A and 4B from the money handling server 20, and operates similarly to the money handling server 20 as described above. That is, while the authentication server 10 performs the first authentication process based on the authentication information 101, the operation terminal 30 serves as a control device for performing the second authentication process based on the user information 102.

Specifically, the operation terminal 30, which has received the user information 102 from the authentication server 10, performs the authentication process for the user 200 and specifies the authority of the authenticated user 200, based on the user information 102 and the mapping data. The operation terminal 30, which has confirmed that the user 200 has the authority to use the money handling apparatus 40 based on the specified authority of the user 200 and the setting shown in FIG. 4B, controls the money handling apparatus 40 to set the money handling apparatus 40 in the money handling executable state. For example, on the display unit of the operation terminal 30, a handling menu showing the kinds of money handling that the user 200 can perform is displayed, so that the user 200 can select and start money handling by using the money handling apparatus 40.

In the example shown in FIG. 5C, as in the examples shown in FIG. 5A and FIG. 5B, the operation terminal 30 can limit the kinds of money handling that the user 200 can perform, and can limit the content of each money handling, based on the setting shown in FIG. 4B. When the operation terminal 30 performs handling based on the user information 102 without intervention of the money handling server 20 as shown in FIG. 5C, information on the handling performed by the money handling apparatus 40 is transmitted to the money handling server 20, and the money handling server 20 manages handling history information.

As described above, in the authentication process by the authentication server 10, the user 200 of the money handling system inputs the authentication information 101 such as the user ID, the password, etc., by operating the operation terminal 30, whereby the user 200 can perform money handling by using the money handling apparatus 40. The user ID and the password are not stored in the money handling server 20 and the money handling apparatus 40 installed in the store, but are stored and managed in the authentication server 10 being a cloud server. The user ID and the password of the user 200 are not included in the user information 102 transmitted/received between the authentication server 10, the money handling server 20, the operation terminal 30 and the money handling apparatus 40. Thus, security related to the authentication process using the user ID and the password can be enhanced.

In addition to the above, other countermeasures for security enhancement are taken in the money handling system. For example, each user 200 cannot be subjected to authentication by the authentication server 10 unless the user 200 installs dedicated application software on his/her own operation terminal 30 such as a smartphone and registers a user ID and a password. The authentication server 10 acquires, from the operation terminal 30 on which the dedicated application software is installed, identification information such as IMEI for identifying the operation terminal 30, and associates the identification information with the user ID as shown in FIG. 2 to manage them. In this case, the authentication server 10 does not perform authentication if the user ID is inputted to another operation terminal 30 whose IMEI is different from that of the operation terminal 30 associated with the inputted user ID.

The authentication information 101 transmitted/received between the authentication server 10 and the operation terminal 30, and the user information 102 transmitted/received between the authentication server 10 and any of the money handling server 20, the money handling apparatus 40, and the operation terminal 30, are encrypted. For example, in order to enhance security, the encryption method is changed according to the date when the information is transmitted/received.

The data shown in FIG. 3 and FIGS. 4A and 4B prepared in the money handling server 20 are also encrypted so that the contents thereof cannot be understood. As described with reference to FIG. 5B, in the case where the money handling apparatus 40 acquires these data from the money handling server 20 to use them, the data acquired and used by the money handling apparatus 40 are deleted after the use. Likewise, as described with reference to FIG. 5C, in the case where the operation terminal 30 uses these data acquired from the money handling server 20 to use them, the data acquired and used by the operation terminal 30 are deleted after the use.

In the present embodiment, the user information 102 includes the store name, the job position, and the like. However, the user information 102 may include a user ID and a password different from those for the authentication information 101. Specifically, a first user ID and a first password to be used for the authentication process in the authentication server 10 and a second user ID and a second password to be used for the authentication process in the money handling server 20 may be registered in the profile data, and the user information 102 may include the second user ID and the second password. In this case, as described above, the authentication server 10 can perform the authentication process based on the first user ID and the first password inputted to the operation terminal 30 by the user 200, and the money handling server 20 can perform the authentication process based on the second user ID and the second password included in the user information 102 generated by the authentication server 10.

In the present embodiment, the profile data is stored in the authentication server 10, and the mapping data is stored in the money handling server 20. However, the data storage places are not particularly limited as long as the money handling system can perform the above-described processes. For example, the profile data may be managed in a storage device or a server other than the authentication server 10, and the mapping data may be managed in a storage device or a server other than the money handling server 20.

In examples of the present embodiment, the kind of money handling that the money handling apparatus 40 can perform, and the upper-limit of the amount of money that can be handled in the money handling are changed based on the user information 102, the mapping data, and the setting data, i.e., based on the authority of the user 200. However, the targets to be changed based on the authority of the user 200 are not limited to those described above.

For example, handling of data regarding the money handling apparatus 40 may be limited according to the authority of the user 200. Specifically, browsing of data, copying/transfer of data, and editing of data may be restricted based on the authority of the user 200. Examples of data whose handling is limited may include: transaction data indicating the content of money handling performed by the money handling apparatus 40; log data indicating the content of operation of the money handling apparatus 40, such as an error generated in the money handling apparatus 40; and inventory amount data indicating the kind and the quantity of money present inside the money handling apparatus 40.

For another example, the operation and processing related to setting of the money handling apparatus 40 may be limited according to the authority of the user 200. Examples of the setting to be limited may include: setting of denominations that the user 200 can handle in the money handling apparatus 40; setting of storage units in the money handling apparatus 40 that the user 200 can use for the money handling, among a plurality of money storage units included in the money handling apparatus 40; and setting related to locking/unlocking of a door from which one or more money storage units are exposed to the outside of the apparatus. The setting to be limited may be setting related to at least one of the user ID, password, job position, and authority of the user 200.

In the present embodiment, the example of the money handling system used in a retail store has been described. However, the money handling system may be used in a branch of a financial institution. The money handling system in the present embodiment is configured to include the authentication server 10, the money handling server 20, and the operation terminal 30, but this configuration is conceptually functional, and the money handling system is not physically limited to the configuration. For example, the authentication server 10 may implement a part of the function and operation of the money handling server 20, or the money handling server 20 may implement a part of the function and operation of the authentication server 10. The operation terminal 30 may implement a part of the function and operation of the authentication server 10. The distributed or integrated forms of each device are not limited to the forms described above, and all or some of the forms may be distributed or integrated functionally or physically in any unit depending on various loads, use statuses, or the like.

As described above, the user of the money handling system is authenticated by inputting only the user ID and the password into the operation terminal, and is allowed to log into the money handling server, and perform money handling with the money handling apparatus connected to the money handling server. The user is authenticated a plurality of times by using the authentication server and the money handling server. When the user, who wants to perform money handling, inputs the user ID and the password only one time, the user is authenticated a plurality of times by the different devices. Thus, it is possible to ensure security related to money handling while realizing the user-friendly authentication method.

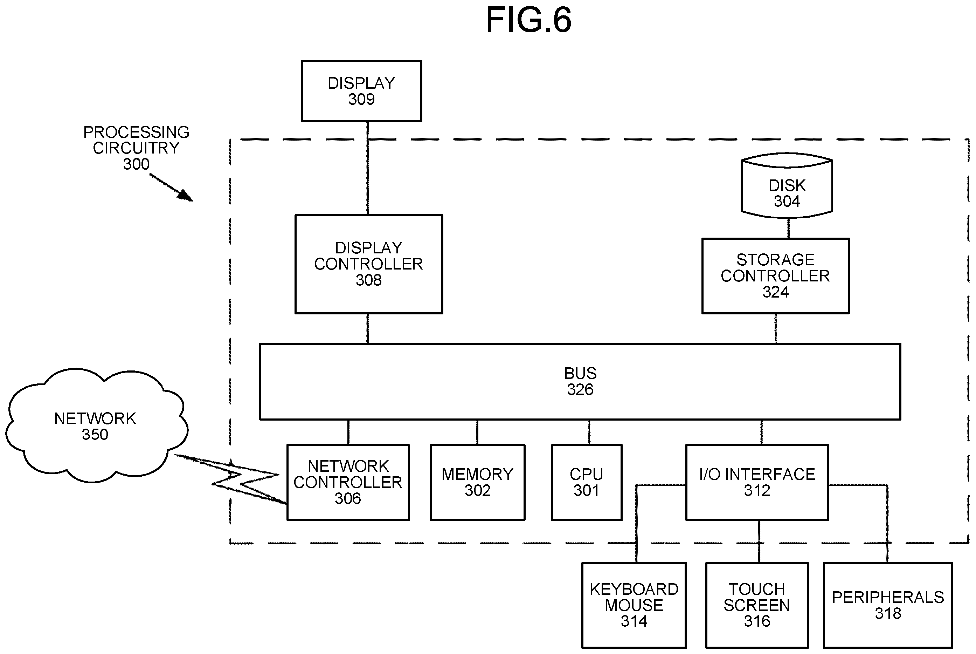

FIG. 6 is a block diagram of processing circuitry that performs computer-based operations in accordance with the present disclosure. FIG. 6 illustrates processing circuitry 300 of authentication server 10, money handling server 20, operation terminal 30 and/or money handling apparatus 40.

Processing circuitry 300 is used to control any computer-based and cloud-based control processes, descriptions or blocks in flowcharts can be understood as representing modules, segments or portions of code which include one or more executable instructions for implementing specific logical functions or steps in the process, and alternate implementations are included within the scope of the exemplary embodiments of the present advancements in which functions can be executed out of order from that shown or discussed, including substantially concurrently or in reverse order, depending upon the functionality involved, as would be understood by those skilled in the art. The functionality of the elements disclosed herein may be implemented using circuitry or processing circuitry which may include general purpose processors, special purpose processors, integrated circuits, ASICs ("Application Specific Integrated Circuits"), conventional circuitry and/or combinations thereof which are configured or programmed to perform the disclosed functionality. Processors are processing circuitry or circuitry as they include transistors and other circuitry therein. The processor may be a programmed processor which executes a program stored in a memory. In the disclosure, the processing circuitry, units, or means are hardware that carry out or are programmed to perform the recited functionality. The hardware may be any hardware disclosed herein or otherwise known which is programmed or configured to carry out the recited functionality.

In FIG. 6, the processing circuitry 300 includes a CPU 301 which performs one or more of the control processes discussed in this disclosure. The process data and instructions may be stored in memory 302. These processes and instructions may also be stored on a storage medium disk 304 such as a hard drive (HDD) or portable storage medium or may be stored remotely. Further, the claimed advancements are not limited by the form of the computer-readable media on which the instructions of the inventive process are stored. For example, the instructions may be stored on CDs, DVDs, in FLASH memory, RAM, ROM, PROM, EPROM, EEPROM, hard disk or any other non-transitory computer readable medium of an information processing device with which the processing circuitry 300 communicates, such as a server or computer. The processes may also be stored in network based storage, cloud-based storage or other mobile accessible storage and executable by processing circuitry 300.

Further, the claimed advancements may be provided as a utility application, background daemon, or component of an operating system, or combination thereof, executing in conjunction with CPU 301 and an operating system such as Microsoft Windows, UNIX, Solaris, LINUX, Apple MAC-OS, Apple iOS and other systems known to those skilled in the art.

The hardware elements in order to achieve the processing circuitry 300 may be realized by various circuitry elements. Further, each of the functions of the above described embodiments may be implemented by circuitry, which includes one or more processing circuits. A processing circuit includes a particularly programmed processor, for example, processor (CPU) 301, as shown in FIG. 6. A processing circuit also includes devices such as an application specific integrated circuit (ASIC) and conventional circuit components arranged to perform the recited functions.

In FIG. 6, the processing circuitry 300 may be a computer or a particular, special-purpose machine. Processing circuitry 300 is programmed to execute processing to control processing circuitry 300 of authentication server 10, money handling server 20 which serves as a control device, operation terminal 30 which serves as a control device and/or money handling apparatus 40 which serves as a control device.

Alternatively, or additionally, the CPU 301 may be implemented on an FPGA, ASIC, PLD or using discrete logic circuits, as one of ordinary skill in the art would recognize. Further, CPU 301 may be implemented as multiple processors cooperatively working in parallel to perform the instructions of the inventive processes described above.

The processing circuitry 300 in FIG. 6 also includes a network controller 306, such as an Ethernet PRO network interface card, for interfacing with network 350. As can be appreciated, the network 350 can be a public network, such as the Internet, or a private network such as a local area network (LAN) or wide area network (WAN), or any combination thereof and can also include Public Switched Telephone Network (PSTN) or Integrated Services Digital Network (ISDN) sub-networks. The network 350 can also be wired, such as an Ethernet network, universal serial bus (USB) cable, or can be wireless such as a cellular network including EDGE, 3G and 4G wireless cellular systems. The wireless network can also be Wi-Fi, wireless LAN, Bluetooth, or any other wireless form of communication that is known. Additionally, network controller 306 may be compliant with other direct communication standards, such as Bluetooth, a near field communication (NFC), infrared ray or other.

The processing circuitry 300 further includes a display controller 308, such as a graphics card or graphics adaptor for interfacing with display 309, such as a monitor. An I/O interface 312 interfaces with a keyboard and/or mouse 314 as well as a touch screen panel 316 on or separate from display 309. I/O interface 312 also connects to a variety of peripherals 318.

The storage controller 324 connects the storage medium disk 304 with communication bus 326, which may be an ISA, EISA, VESA, PCI, or similar, for interconnecting all of the components of the processing circuitry 300. A description of the general features and functionality of the display 309, keyboard and/or mouse 314, as well as the display controller 308, storage controller 324, network controller 306, and I/O interface 312 is omitted herein for brevity as these features are known.

The exemplary circuit elements described in the context of the present disclosure may be replaced with other elements and structured differently than the examples provided herein. Moreover, circuitry configured to perform features described herein may be implemented in multiple circuit units (e.g., chips), or the features may be combined in circuitry on a single chipset.

The functions and features described herein may also be executed by various distributed components of a system. For example, one or more processors may execute these system functions, wherein the processors are distributed across multiple components communicating in a network. The distributed components may include one or more client and server machines, which may share processing, in addition to various human interface and communication devices (e.g., display monitors, smart phones, tablets, personal digital assistants (PDAs)). The network may be a private network, such as a LAN or WAN, or may be a public network, such as the Internet. Input to the system may be received via direct user input and received remotely either in real-time or as a batch process. Additionally, some implementations may be performed on modules or hardware not identical to those described. Accordingly, other implementations are within the scope that may be claimed.

A money handling system according to the present disclosure includes: an input terminal configured to receive an input of authentication information for authenticating a user of the money handling apparatus; and a control device configured to receive user information of the user from an authentication server that receives the authentication information of the user from the input terminal and performs a first authentication process for the user based on the authentication information. The control device performs a second authentication process for the user, based on the user information generated by the authentication server.

In the above configuration, a money handling server used in a store where the money handling apparatus is installed, may serve as the control device. The money handling apparatus may serve as the control device, or the input terminal may serve as the control device.

In the above configuration, the authentication server may generate the user information from information on the user, which has been registered in profile data in advance.

In the above configuration, the profile data may include a user ID and a password.

In the above configuration, the profile data may include job position information of the user.

In the above configuration, the profile data may include information indicating a store to which the user belongs.

In the above configuration, the control device may have, stored therein, mapping data indicating the correspondence between information included in the user information, and information on handling that the money handling apparatus performs.

In the above configuration, the control device may perform the second authentication process, based on the user information, and information that has been mapped to the user information.

In the above configuration, the control device may limit handling that the user can perform with the control device, based on the user information, and information that has been mapped to the user information.

In the above configuration, owing to the limitation on the handling that the user can perform by using the control device, the display content of a handling menu indicating the kinds of handling that the user can perform with the money handling apparatus may be changed. A process related to at least one of: transaction data of the money handling apparatus; log data of the money handling apparatus; inventory amount data of the money handling apparatus; setting of the money handling apparatus; setting of a user ID; setting of a password; setting of a job position; and setting of an authority corresponding to a job position, may be changed in the handling menu.

In the above configuration, the control device may limit handling that the user can perform by using the money handling apparatus, based on the user information, and information that has been mapped to the user information.

In the above configuration, the information mapped to the user information may be stored in the control device in advance.

In the above configuration, the authentication information may include a user ID and a password.

In the above configuration, the information registered in the profile data may further include authority information indicating contents of money handling that the user can perform by using the money handling apparatus. The control device may receive the user information including the authority information from the authentication server, and may perform the second authentication process of confirming that the authority information included in the user information matches an authority that is given to the user and managed in the control device and.

In the above configuration, the user information may include the job position of the user, and/or information indicating the store to which the user belongs.

In the above configuration, the information registered in the profile data may further include job position information indicating contents of money handling that the user can perform by using the money handling apparatus. The control device may receive the user information including the job position information from the authentication server, and may perform the second authentication process of confirming that the job position information included in the user information matches job position information that is managed in the control device and is given to the user.

In the above configuration, the money handling server may perform a notification process for notifying a result of the determination through a predetermined terminal.

A money handling method according to the present disclosure includes: receiving, by a control device, user information of a user who wants to use a money handling apparatus, from an authentication server that receives authentication information of the user from an input terminal, and performs a first authentication process for the user based on the authentication information; and performing, by the control device, a second authentication process for the user based on the user information.

As described above, the money handling system and the money handling method according to the present disclosure are useful in ensuring security related to money handling while using the user-friendly authentication method.

## Claims

1. A money handling system comprising:
a money handling apparatus (40) to perform money handling;
an input terminal (30) configured to
receive an input of authentication information for authenticating a user of the money handling apparatus (40), and
transmit the authentication information to an authentication server (10) which performs a first authentication process for the user based on the authentication information; and
a control device (20) configured to
receive user information of the user from the authentication server (10) which has generated the user information different from the authentication information, based on a result of the first authentication process,
perform a second authentication process for the user by determining whether or not information included in the user information generated by the authentication server (10) matches information which has been managed by the control device (20), and
control the money handling apparatus (40) to allow the user to use the money handling apparatus (40), based on a result of the second authentication process.

2. The money handling system according to claim 1, wherein
the authentication server (10) generates the user information from information on the user, which has been registered in profile data in advance.

3. The money handling system according to claim 1, wherein
the control device (20) manages mapping data indicating correspondence between information to be included in the user information generated by the authentication server (10) and information used by the control device (20), and
the control device (20) performs the second authentication process, based on both the user information, and information corresponding to the user information in the mapping data.

4. The money handling system according to claim 1, wherein
the control device (20) manages mapping data indicating correspondence between information to be included in the user information generated by the authentication server (10) and information used by the control device (20), and
the control device (20) is further configured to limit handling of the control device (20) by the user based on both the user information, and information corresponding to the user information in the mapping data.

5. The money handling system according to claim 1, wherein
the control device (20) manages mapping data indicating correspondence between information to be included in the user information generated by the authentication server (10) and information used by the control device (20), and
the control device (20) is further configured to limit handling of the money handling apparatus (40) by the user based on both the user information, and information corresponding to the user information in the mapping data.

6. The money handling system according to any one of claims 1 to 5, wherein
the authentication server (10) generates the user information including first information and second information,
the control device (20)
manages mapping data indicating correspondence between the first information to be included in the user information and third information used by the control device (20),
performs the second authentication process based on whether or not the second information of the user information matches the third information corresponding to the first information in the mapping data.

7. The money handling system according to claim 6,
wherein
the second information included in the user information is authority information indicating contents of money handling performable by the user using the money handling apparatus (40), and
the control device (20)
performs the second authentication process of confirming that the authority information included in the user information matches an authority that is managed in the control device (20) as the third information and is given to the user.

8. The money handling system according to claim 6, wherein
the second information included in the user information is job position information indicating contents of money handling performable by the user using the money handling apparatus (40), and
the control device (20) performs the second authentication process of confirming that the job position information included in the user information matches job position information that is managed in the control device (20) as the third information and indicates a job position given to the user.

9. The money handling system according to any one of claims 1 to 8, wherein the authentication information includes a user identifier (ID) and a password.

10. The money handling system according to any one of claims 1 to 9, wherein the user information includes information indicating a store to which the user belongs.

11. A money handling method comprising:
receiving, by a control device (20) from an authentication server (10), user information of a user of a money handling apparatus (40), wherein the authentication server (10) receives authentication information of the user from an input terminal (30), performs a first authentication process for the user based on the authentication information, and generates the user information different from the authentication information based on a result of the first authentication process;
performing, by the control device (20), a second authentication process for the user based on the user information, wherein the second authentication process is performed by determining whether or not information included in the user information generated by the authentication server (10) matches information which has been managed by the control device, and
controlling, by the control device (20), the money handling apparatus (40) to allow the user to use the money handling apparatus (40), based on a result of the second authentication process.

## Patentansprüche

1. Geldhandhabungssystem, aufweisend:
eine Geldhandhabungsvorrichtung (40), um Geldhandhabung durchzuführen;
ein Eingabeterminal (30), das konfiguriert ist
eine Eingabe von Authentifizierungsinformationen zum Authentifizieren eines Benutzers der Geldhandhabungsvorrichtung (40) zu erhalten bzw. zu bekommen, und
die Authentifizierungsinformationen an einen Authentifizierungsserver (10) zu übertragen, welcher einen ersten Authentifizierungsprozess für den Benutzer durchführt, basierend auf den Authentifizierungsinformationen; und
eine Steuervorrichtung (20), die konfiguriert ist,
Benutzerinformationen des Benutzers von dem Authentifizierungsserver (10) zu erhalten bzw. zu bekommen, welcher die Benutzerinformationen unterschiedlich von den Authentifizierungsinformationen generiert bzw. erzeugt hat, basierend auf einem Ergebnis des ersten Authentifizierungsprozesses,
einen zweiten Authentifizierungsprozess für den Benutzer durchzuführen, und zwar durch Bestimmen, ob oder nicht Informationen, die in den Benutzerinformationen enthalten sind, die durch den Authentifizierungsserver (10) generiert bzw. erzeugt werden, zu Informationen passen, welche durch die Steuervorrichtung (20) verwaltet bzw. gemanagt worden sind, und
die Geldhandhabungsvorrichtung (40) zu steuern, um es dem Benutzer zu ermöglichen, die Geldhandhabungsvorrichtung (40) zu benutzen, basierend auf einem Ergebnis des zweiten Authentifizierungsprozesses.

2. Geldhandhabungssystem gemäß Anspruch 1, wobei der Authentifizierungsserver (10) die Benutzerinformationen aus Informationen über den Benutzer generiert bzw. erzeugt, welche in Profildaten im Voraus registriert bzw. verzeichnet worden sind.

3. Geldhandhabungssystem gemäß Anspruch 1, wobei die Steuervorrichtung (20) Mapping-Daten bzw. Zuordnungsdaten verwaltet bzw. managt, die Zuordnung bzw. Übereinstimmung zwischen Informationen anzeigen, um in den Benutzerinformationen enthalten zu sein, die durch den Authentifizierungsserver (10) generiert bzw. erzeugt werden, und Informationen anzeigen, die durch die Steuervorrichtung (20) verwendet werden, und wobei die Steuervorrichtung (20) den zweiten Authentifizierungsprozess durchführt, basierend auf sowohl den Benutzerinformationen, als auch Informationen entsprechend zu den Benutzerinformationen in den Mapping-Daten bzw. Zuordnungsdaten.

4. Geldhandhabungssystem gemäß Anspruch 1, wobei die Steuervorrichtung (20) Mapping-Daten bzw. Zuordnungsdaten verwaltet bzw. managt, die Zuordnung bzw. Übereinstimmung zwischen Informationen, um in den Benutzerinformationen enthalten zu sein, die durch den Authentifizierungsserver (10) generiert bzw. erzeugt werden, und Informationen anzeigen, die durch die Steuervorrichtung (20) verwendet werden, und
wobei die Steuervorrichtung (20) ferner konfiguriert ist, Handhabung der Steuervorrichtung (20) durch den Benutzer zu limitieren, basierend auf sowohl den Benutzerinformationen, als auch Informationen, die den Benutzerinformationen in den Mapping-Daten bzw. Zuordnungsdaten entsprechen.

5. Geldhandhabungssystem gemäß Anspruch 1, wobei die Steuervorrichtung (20) Mapping-Daten bzw. Zuordnungsdaten verwaltet bzw. managt, die Zuordnung bzw. Übereinstimmung zwischen Informationen, um in den Benutzerinformationen enthalten zu sein, die durch den Authentifizierungsserver (10) generiert bzw. erzeugt werden, und Informationen anzeigen, die durch die Steuervorrichtung (20) verwendet werden, und
wobei die Steuervorrichtung (20) ferner konfiguriert ist, die Handhabung der Geldhandhabungsvorrichtung (40) durch den Benutzer zu limitieren, basierend auf sowohl den Benutzerinformationen, als auch Informationen, die den Benutzerinformationen in den Mapping-Daten bzw. Zuordnungsdaten entsprechen.

6. Geldhandhabungssystem gemäß irgendeinem der Ansprüche 1 bis 5, wobei der Authentifizierungsserver (10) generiert bzw. erzeugt die Benutzerinformationen, die erste Informationen und zweite Informationen enthalten, wobei die Steuervorrichtung (20) Mapping-Daten bzw. Zuordnungsdaten verwaltet bzw. managt, die Zuordnung bzw. Übereinstimmung zwischen den ersten Informationen, um in den Benutzerinformationen enthalten zu sein, und dritten Informationen anzeigen, die durch die Steuervorrichtung (20) verwendet werden,
führt den zweiten Authentifizierungsprozess durch, basierend auf ob oder nicht die zweiten Informationen der Benutzerinformationen zu den dritten Informationen passen, entsprechend zu den ersten Informationen in den Mapping-Daten bzw. Zuordnungsdaten.

7. Geldhandhabungssystem gemäß Anspruch 6, wobei die zweiten Informationen, die in den Benutzerinformationen enthalten sind, sind Berechtigungsinformationen, die den Inhalt der Geldhandhabung anzeigen, durchführbar durch den Benutzer, wobei die Geldhandhabungsvorrichtung (40) verwendet wird, und
die Steuervorrichtung (20) führt den zweiten Authentifizierungsprozess zur Bestätigung durch, das die Berechtigungsinformationen, die in den Benutzerinformationen enthalten sind, zu einer Berechtigung passen, die in der Steuervorrichtung (20) als die dritten Informationen verwaltet bzw. gemanagt werden und wird an den Benutzer gegeben bzw. ausgegeben.

8. Geldhandhabungssystem gemäß Anspruch 6, wobei die zweiten Informationen, die in den Benutzerinformationen enthalten sind, sind Auftragspositionsinformationen, die den Inhalt der Geldhandhabung anzeigen, durchführbar durch den Benutzer, wobei die Geldhandhabungsvorrichtung (40) verwendet wird, und
wobei die Steuervorrichtung (20) den zweiten Authentifizierungsprozess durchgeführt, und zwar zur Bestätigung, dass die Auftragspositionsinformationen, die in den Benutzerinformationen enthalten sind, zu Auftragspositionsinformationen passen, die in der Steuervorrichtung (20) als die dritten Informationen verwaltet bzw. gemanagt werden und zeigt eine Auftragsposition an, die an den Benutzer gegeben bzw. ausgegeben wird.

9. Geldhandhabungssystem gemäß irgendeinem der Ansprüche 1 bis 8, wobei die Authentifizierungsinformationen eine Benutzerkennung (ID) und ein Passwort enthalten.

10. Geldhandhabungssystem gemäß irgendeinem der Ansprüche 1 bis 9, wobei die Benutzerinformationen Informationen enthalten, die einen Laden bzw. ein Geschäft anzeigen, zu welchem der Benutzer gehört.

11. Geldhandhabungsverfahren, aufweisend: Erhalten bzw. Bekommen durch eine Steuervorrichtung (20) von einem Authentifizierungsserver (10) Benutzerinformationen eines Benutzers einer Geldhandhabungsvorrichtung (40), wobei der Authentifizierungsserver (10) Authentifizierungsinformationen des Benutzers von einem Eingabeterminal (30) erhält bzw.
bekommt, einen ersten Authentifizierungsprozess für den Benutzer durchführt, basierend auf den Authentifizierungsinformationen, und die Benutzerinformationen generiert bzw. erzeugt, unterschiedlich von den Authentifizierungsinformationen, basierend auf einem Ergebnis des ersten Authentifizierungsprozesses;
Durchführen durch die Steuervorrichtung (20) eines zweiten Authentifizierungsprozesses für den Benutzer, basierend auf den Benutzerinformationen, wobei der zweite Authentifizierungsprozess durch Bestimmen durchgeführt wird, ob oder nicht Informationen, die in den Benutzerinformationen enthalten sind, die durch den Authentifizierungsserver (10) generiert bzw. erzeugt werden, zu den Informationen passen, welche durch die Steuervorrichtung verwaltet bzw. gemanagt worden sind, und
Steuern durch die Steuervorrichtung (20) der Geldhandhabungsvorrichtung (40), um es dem Benutzer zu ermöglichen, die Geldhandhabungsvorrichtung (40) zu benutzen, basierend auf einem Ergebnis des zweiten Authentifizierungsprozesses.

## Revendications

1. Système de manipulation d'argent comprenant :
un appareil de manipulation d'argent (40) pour réaliser une manipulation d'argent;
un terminal d'entrée (30) configuré pour
recevoir une entrée d'informations d'authentification pour authentifier un utilisateur de l'appareil de manipulation d'argent (40), et
transmettre les informations d'authentification à un serveur d'authentification (10) qui réalise un premier processus d'authentification pour l'utilisateur sur la base des informations d'authentification ; et
un dispositif de commande (20) configuré pour
recevoir des informations d'utilisateur de l'utilisateur à partir du serveur d'authentification (10) qui a généré des informations d'utilisateur différentes des informations d'authentification, sur la base d'un résultat du premier processus d'authentification,
réaliser un deuxième processus d'authentification pour l'utilisateur en déterminant si les informations incluses dans les informations d'utilisateur générées par le serveur d'authentification (10) concordent ou non avec des informations qui ont été gérées par le dispositif de commande (20), et
commander l'appareil de manipulation d'argent (40) pour permettre à l'utilisateur d'utiliser l'appareil de manipulation d'argent (40), sur la base d'un résultat du deuxième processus d'authentification.

2. Système de manipulation d'argent selon la revendication 1, dans lequel
le serveur d'authentification (10) génère les informations d'utilisateur à partir d'informations sur l'utilisateur qui ont été enregistrées dans des données de profil au préalable.

3. Système de manipulation d'argent selon la revendication 1, dans lequel
le dispositif de commande (20) gère des données de mappage indiquant une correspondance entre des informations à inclure dans les informations d'utilisateur générées par le serveur d'authentification (10) et des informations utilisées par le dispositif de commande (20), et
le dispositif de commande (20) réalise le deuxième processus d'authentification, sur la base à la fois des informations d'utilisateur et d'informations correspondant aux informations d'utilisateur dans les données de mappage.

4. Système de manipulation d'argent selon la revendication 1, dans lequel
le dispositif de commande (20) gère des données de mappage indiquant une correspondance entre des informations à inclure dans les informations d'utilisateur générées par le serveur d'authentification (10) et des informations utilisées par le dispositif de commande (20), et
le dispositif de commande (20) est en outre configuré pour limiter une manipulation du dispositif de commande (20) par l'utilisateur sur la base à la fois des informations d'utilisateur et d'informations correspondant aux informations d'utilisateur dans les données de mappage.

5. Système de manipulation d'argent selon la revendication 1, dans lequel
le dispositif de commande (20) gère des données de mappage indiquant une correspondance entre des informations à inclure dans les informations d'utilisateur générées par le serveur d'authentification (10) et des informations utilisées par le dispositif de commande (20), et
le dispositif de commande (20) est en outre configuré pour limiter une manipulation de l'appareil de manipulation d'argent (40) par l'utilisateur sur la base à la fois des informations d'utilisateur et d'informations correspondant aux informations d'utilisateur dans les données de mappage.

6. Système de manipulation d'argent selon l'une quelconque des revendications 1 à 5, dans lequel
le serveur d'authentification (10) génère les informations d'utilisateur incluant des premières informations et des deuxièmes informations,
le dispositif de commande (20)
gère des données de mappage indiquant une correspondance entre les premières informations à inclure dans les informations d'utilisateur et des troisièmes informations utilisées par le dispositif de commande (20),
réalise le deuxième processus d'authentification sur la base du fait que les deuxièmes informations des informations d'utilisateur concordent ou non avec les troisièmes informations correspondant aux premières informations dans les données de mappage.

7. Système de manipulation d'argent selon la revendication 6, dans lequel
les deuxièmes informations incluses dans les informations d'utilisateur sont des informations d'autorité indiquant des contenus de manipulation d'argent réalisable par l'utilisateur à l'aide de l'appareil de manipulation d'argent (40), et
le dispositif de commande (20)
réalise le deuxième processus d'authentification consistant à confirmer que les informations d'autorité incluses dans les informations d'utilisateur concordent avec une autorité qui est gérée dans le dispositif de commande (20) en tant que troisièmes informations et sont données à l'utilisateur.

8. Système de manipulation d'argent selon la revendication 6, dans lequel
les deuxièmes informations incluses dans les informations d'utilisateur sont des informations de poste professionnel indiquant des contenus de manipulation d'argent réalisable par l'utilisateur à l'aide de l'appareil de manipulation d'argent (40), et
le dispositif de commande (20) réalise le deuxième processus d'authentification consistant à confirmer que les informations de poste professionnel incluses dans les informations d'utilisateur concordent avec des informations de poste professionnel qui sont gérées dans le dispositif de commande (20) en tant que troisièmes informations et indiquent un poste professionnel donné à l'utilisateur.

9. Système de manipulation d'argent selon l'une quelconque des revendications 1 à 8, dans lequel les informations d'authentification incluent un identifiant d'utilisateur (ID) et un mot de passe

10. Système de manipulation d'argent selon l'une quelconque des revendications 1 à 9, dans lequel les informations d'utilisateur incluent des informations indiquant un commerce auquel l'utilisateur appartient.

11. Procédé de manipulation d'argent comprenant :
la réception, par un dispositif de commande (20) à partir d'un serveur d'authentification (10), d'informations d'utilisateur d'un utilisateur d'un appareil de manipulation d'argent (40), dans lequel le serveur d'authentification (10) reçoit des informations d'authentification de l'utilisateur à partir d'un terminal d'entrée (30), réalise un premier processus d'authentification pour l'utilisateur sur la base des informations d'authentification, et génère les informations d'utilisateur différentes des informations d'authentification sur la base d'un résultat du premier processus d'authentification ;
la réalisation, par le dispositif de commande (20), d'un deuxième processus d'authentification pour l'utilisateur sur la base des informations d'utilisateur, dans lequel le deuxième processus d'authentification est réalisé en déterminant si les informations incluses dans les informations d'utilisateur générées par le serveur d'authentification (10) concordent ou non avec des informations qui ont été gérées par le dispositif de commande, et
la commande, par le dispositif de commande (20), de l'appareil de manipulation d'argent (40) pour permettre à l'utilisateur d'utiliser l'appareil de manipulation d'argent (40), sur la base d'un résultat du deuxième processus d'authentification.
